(19) Europäisches Patentamt
European Patent Office
Office européen des brevets

(11) **EP 3 985 068 A1**

(12) **EUROPEAN PATENT APPLICATION**
published in accordance with Art. 153(4) EPC

(43) Date of publication:
**20.04.2022 Bulletin 2022/16**

(21) Application number: **20822959.1**

(22) Date of filing: **09.06.2020**

(51) International Patent Classification (IPC):
*C08L 29/14* (2006.01)   *B32B 17/10* (2006.01)
*B32B 27/30* (2006.01)   *C03C 27/12* (2006.01)
*C08F 20/26* (2006.01)   *C08L 33/08* (2006.01)

(52) Cooperative Patent Classification (CPC):
**B32B 17/10743; B32B 17/10036; B32B 17/10761;
B32B 27/306; B32B 27/308; C08F 20/26;
C08L 29/14; C08L 33/08**

(86) International application number:
**PCT/JP2020/022752**

(87) International publication number:
**WO 2020/250906 (17.12.2020 Gazette 2020/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2019 JP 2019109113**

(71) Applicant: SEKISUI CHEMICAL CO., LTD.
**Osaka-shi
Osaka
530-8565 (JP)**

(72) Inventors:
• **OOHIGASHI, Yuji**
**Mishima-gun, Osaka 618-0021 (JP)**
• **HIGASHIONNA, Yui**
**Mishima-gun, Osaka 618-0021 (JP)**
• **YAHARA, Kazuyuki**
**Mishima-gun, Osaka 618-0021 (JP)**
• **FUKATANI, Juichi**
**Mishima-gun, Osaka 618-0021 (JP)**

(74) Representative: **Ter Meer Steinmeister & Partner
Patentanwälte mbB
Nymphenburger Straße 4
80335 München (DE)**

(54) **RESIN COMPOSITION, RESIN FILM, AND GLASS LAMINATE**

(57)    The resin composition of the present invention comprises a polyvinyl acetal resin (A) and an acrylic-based polymer (B), in which the acrylic-based polymer (B) is a polymer of a monomer component comprising an acrylic-based monomer, a dHSP/R of the monomer component relative to the polyvinyl acetal resin (A) is 1.16 or less, and a content of the acrylic-based polymer (B) is 20 parts by mass or more and 90 parts by mass or less based on 100 parts by mass of the polyvinyl acetal resin (A).

EP 3 985 068 A1

**Description**

Technical Field

The present invention relates to a resin composition, a resin film formed of a resin composition, and a glass laminate comprising a resin film, such as laminated glass.

Background Art

Polyvinyl acetal resins are widely used in interlayer films for laminated glass in laminated glass. Laminated glass includes two glass plates and an interlayer film for laminated glass disposed between the two glass plates, and the two glass plates are integrated with the interlayer film for laminated glass. Even when such laminated glass is subjected to external impact and is then broken, it generates a small amount of scattering glass debris. This means the laminated glass is excellent in safety, and therefore it is widely used in, for example, automobiles, railway vehicles, airplanes, marine vessels, and architectural structures.

Polyvinyl acetal resins are studied for use in applications where transparency is required, for example, various paint materials, films for optical members, optical adhesives, dispersants for optical members, and binders for optical members, in addition to interlayer films for laminated glass.

Conventionally, compounding of resin components other than polyvinyl acetal resins into resin compositions comprising polyvinyl acetal resins has been studied in order to impart various functions. For example, PTL 1 discloses a resin composition comprising a polyvinyl acetal resin, and a resin having a crosslinked structure, such as an acrylic resin, in which the resin having a crosslinked structure is dispersed as a dispersion phase in the polyvinyl acetal resin serving as a continuous phase. It is indicated that the resin composition exhibits a local maximum value of the loss tangent due to the polyvinyl acetal resin, of 40°C or more, and a local maximum value of the loss tangent due to the resin having a crosslinked structure, of 10°C or less, in a dynamic viscoelastic spectrum measured at a frequency of 10 Hz, in order to allow excellent mechanical strength to be exhibited in a wide temperature range from a low temperature to a high temperature.

PTL 2 discloses a formed product comprising a polyvinyl acetal resin and a polymer of a polymerizable component comprising a (meth)acrylate compound having two or more (meth)acryloyl groups, in which the content of the polymer based on 100 parts by weight of the polyvinyl acetal resin is 85 parts by weight or more and 180 parts by weight or less, and the formed product has a phase separation structure. The formed product is indicated to be increased in break strength against deforming stress at a high rate and at a low temperature, and to be suitable in, for example, an interlayer film for laminated glass for automobiles.

Furthermore, PTL 3 discloses an interlayer film for laminated glass, comprising a polyvinyl acetal resin and a second resin such as an acrylic resin, and having a phase separation structure. PTL 3 indicates that a relationship between the complex viscosity and the frequency in measurement of the complex viscosity is constant and the glass transition temperature of a component derived from the second resin is lower by 30°C or more, than the glass transition temperature of a component derived from the polyvinyl acetal resin, to result in an increase in flexural rigidity in a wide temperature range and also an increase in penetration resistance of laminated glass.

Citation List

Patent Literature

PTL 1: WO 2014/050746
PTL 2: WO 2018/181755
PTL 3: WO 2018/181758

Summary of Invention

Technical Problem

A resin composition comprising a polyvinyl acetal resin, when used in laminated glass or other application where transparency is required, can desirably keep high transparency under a wide temperature environment from a low temperature to a high temperature. However, the resin composition shown in each of PTLs described above is indicated to be increased in, for example, mechanical strength and flexural rigidity in a wide temperature range because of comprising a polyvinyl acetal resin and a second resin such as an acrylic resin, but not indicated to be able to keep high transparency in a wide temperature range.

An object of the present invention is to provide a resin composition comprising a polyvinyl acetal resin, in which the resin composition is not only favorable in tensile characteristics such as elongation and tensile strength, but also high in transparency and excellent in optical characteristics in a wide temperature range from a low temperature to a high temperature.

Solution to Problem

The present inventors have made intensive studies, and as a result, have found that the above problems can be solved by a resin composition comprising a polyvinyl acetal resin (A) and an acrylic-based polymer (B), the dHSP/R of a monomer component forming the acrylic-based polymer (B) relative to the resin (A) and the content of the acrylic-based polymer (B) being respectively in predetermined ranges, thereby completing the following present invention. That is, the present invention provides the following [1] to [17].

[1] A resin composition comprising a polyvinyl acetal resin (A) and an acrylic-based polymer (B),

the acrylic-based polymer (B) being a polymer of a monomer component comprising an acrylic-based monomer, a dHSP/R of the monomer component relative to the polyvinyl acetal resin (A) being 1.16 or less, and a content of the acrylic-based polymer (B) being 20 parts by mass or more and 90 parts by mass or less based on 100 parts by mass of the polyvinyl acetal resin (A).

[2] The resin composition according to [1], wherein the monomer component comprises an acrylic-based monomer (B1) having at least one functional group (X) selected from the group consisting of a hydroxy group, a carboxy group, a thiol group, an amino group, a group having an ether bond, a group having a urethane bond, and a group having an amide bond.
[3] The resin composition according to [2], wherein the acrylic-based monomer (B1) comprises at least any of an acrylic-based monomer (B1) having a hydroxy group or an acrylic-based monomer (B1) having a carboxy group.
[4] The resin composition according to [3], wherein the acrylic-based monomer (B1) having a hydroxy group is hydroxyalkyl (meth)acrylate, and the acrylic-based monomer (B1) having a carboxy group is selected from the group consisting of acrylic acid, methacrylic acid, ω-carboxy-polycaprolactone mono(meth)acrylate, 2-(meth)acryloyloxyethyl-succinic acid, 2-(meth)acryloyloxyethylhexahydrophthalic acid, and 2-(meth)acryloyloxyethyl-phthalic acid.
[5] The resin composition according to any one of [2] to [4], wherein a content of the acrylic-based monomer (B1) is 5% by mass or more based on a total amount of the monomer component.
[6] The resin composition according to any one of [1] to [5], comprising no plasticizer, or comprising 10 parts by mass or less of a plasticizer based on 100 parts by mass in total of the polyvinyl acetal resin (A) and the acrylic-based polymer (B).
[7] The resin composition according to any one of [1] to [6], wherein a glass transition temperature of the acrylic-based polymer (B) is 40°C or less.
[8] The resin composition according to any one of [1] to [7], wherein the polyvinyl acetal resin (A) is a polyvinyl butyral resin.
[9] The resin composition according to any one of [1] to [8], wherein a hydroxyl group content of the polyvinyl acetal resin (A) is 15% by mol or more and 37% by mol or less.
[10] The resin composition according to any one of [1] to [9], wherein a degree of acetylation of the polyvinyl acetal resin (A) is 0.01% by mol or more and 30% by mol or less.
[11] The resin composition according to any one of [1] to [10], wherein a degree of acetalization of the polyvinyl acetal resin (A) is 40% by mol or more and 85% by mol or less.
[12] The resin composition according to any one of [1] to [11], wherein an average degree of polymerization of the polyvinyl acetal resin (A) is 500 or more and 5000 or less.
[13] A resin film formed of the resin composition according to any one of [1] to [12].
[14] The resin film according to [13], wherein the resin film forms an interlayer film for laminated glass.
[15] A glass laminate comprising the resin film according to [13] or [14], and a glass member, wherein the resin film is provided on at least one surface of the glass member.
[16] A glass laminate comprising the resin film according to [14], and a pair of glass members, wherein the resin film is disposed between the pair of glass members.
[17] The glass laminate according to [15] or [16], wherein any of the glass members is organic glass.

Advantageous Effects of Invention

The present invention can provide a resin composition comprising a polyvinyl acetal resin, in which the resin composition is not only favorable in tensile characteristics such as elongation and tensile strength, but also high in transparency and excellent in optical characteristics in a wide temperature range from a low temperature to a high temperature.

Description of Embodiments

[Resin composition]

Hereinafter, the present invention is described in detail with reference to embodiments.

The resin composition of the present invention comprises a polyvinyl acetal resin (A) and an acrylic-based polymer (B), the acrylic-based polymer (B) is a polymer of a monomer component comprising an acrylic-based monomer, and the dHSP/R of the monomer component forming the acrylic-based polymer (B) relative to the polyvinyl acetal resin (A) is 1.16 or less.

The Hansen solubility parameter (HSP) is a solubility parameter indicated by "Hansen Solubility Parameters in Practice, Complete with eBook. software and data 5th edition. Steve Abbott, Charles M. Hansen, Hiroshi Yamamoto with Richard S Valpey III (SC Johnson)". The Hansen solubility parameter (HSP) is represented by three components of a dispersion term ($\delta D$), a polarization term ($\delta P$), and a hydrogen bond term ($\delta H$), and can be plotted on a three-dimensional space where each of such terms serves as an axis.

A solute forms a dissolution sphere having a radius R indicating a dissolution region around the HSP thereof. In a case where the HSP of a solvent, when plotted, is included in the dissolution sphere of the solute, the solvent can be regarded as dissolving the solute. Whether or not the HSP is included in the dissolution sphere is determined with the dHSP/R obtained by dividing the distance (dHSP) between the HSP of the solute and that of the solvent by the dissolution sphere radius R of the solute. The dHSP/R is represented by the following expression. In general, a lower dHSP leads to higher compatibility between the solute and the solvent. The solvent corresponds to the monomer component forming the acrylic-based polymer (B) and the solute corresponds to the polyvinyl acetal resin (A), in the dHSP/R for use in the present invention.

$$dHSP/R = (4 \times (\delta D1 \text{ - } \delta D2)^2 + (\delta P1 \text{ - } \delta P2)^2 + (\delta H1 \text{ - } \delta H2)^2)^{0.5}/R$$

The detail of a specific method for calculating the dHSP/R is as shown in Examples.

A dHSP/R of the monomer component forming the acrylic-based polymer (B) relative to the polyvinyl acetal resin (A), of 1.16 or less, indicates high compatibility of the acrylic-based polymer (B) or the monomer component forming the acrylic-based polymer (B) with the polyvinyl acetal resin (A). Accordingly, the polyvinyl acetal resin (A) and the acrylic-based polymer (B) are sufficiently compatible in the resin composition and do not cause phase separation in a range from a low temperature to a high temperature or, when cause phase separation, can allow each phase to have a minute size. Thus, light is prevented from being refracted or reflected at an interface between phases, resulting in an increase in transparency of the resin composition in a range from a low temperature to a high temperature.

A dHSP/R of more than 1.16 causes low compatibility of the acrylic-based polymer (B) or the monomer component forming the acrylic-based polymer (B) with the polyvinyl acetal resin (A), and makes an increase in transparency of the resin composition difficult in a range from a low temperature to a high temperature. The dHSP/R is preferably 0.9 or less, more preferably 0.8 or less, further preferably 0.7 or less, still further preferably 0.6 or less, from the viewpoint of a more increase in transparency of the resin composition. A lower dHSP/R is more preferable from the viewpoint of an enhancement in compatibility and thus an increase in transparency, and the lower limit is 0.

<Polyvinyl acetal resin (A)>

The polyvinyl acetal resin (A) is obtained by acetalizing a polyvinyl alcohol with aldehyde. The polyvinyl alcohol is obtained by, for example, saponifying a polyvinyl ester such as polyvinyl acetate. The polyvinyl acetal resin (A) may be used singly or in combinations of two or more kinds thereof.

The polyvinyl alcohol generally used is a polyvinyl alcohol having a degree of saponification of 80 to 99.8% by mol. The average degree of polymerization of the polyvinyl alcohol is preferably 500 or more and 5000 or less in order that the average degree of polymerization of the polyvinyl acetal resin (A) is adjusted in a desired range. The average degree of polymerization of the polyvinyl alcohol is determined by a method according to JIS K6726 "polyvinyl alcohol testing method".

The number of carbon atoms in an acetal group included in the polyvinyl acetal resin (A) is not particularly limited, and is preferably 2 to 10, more preferably 2 to 6, further preferably 2, 3 or 4. Such an acetal group is specifically particularly preferably a butyral group, and the polyvinyl acetal resin (A) is accordingly preferably a polyvinyl butyral resin. The degree of acetalization of the polyvinyl acetal resin (A) is preferably 40% by mol or more and 85% by mol or less. The degree of acetalization is more preferably 55% by mol or more, further preferably 60% by mol or more, and more preferably 75% by mol or less, further preferably 70% by mol or less. With the degree of acetalization in such a range, the hydroxyl group content can be easily adjusted in a desired range described below. With the degree of acetalization equal to or more than the lower limit, dHSP/R can be reduced easily, resulting in an increase in transparency. Herein, the degree of acetalization means the degree of acetoacetalization in a case where such an acetal group in the polyvinyl acetal resin (A) is an acetoacetal group, and means the degree of butyralization in a case where such an acetal group is a butyral group.

The hydroxyl group content of the polyvinyl acetal resin (A) is preferably 15% by mol or more, more preferably 20% by mol or more, further preferably 23% by mol or more, and preferably 37% by mol or less, more preferably 36% by mol or less, further preferably 35% by mol or less. With the hydroxyl group content equal to or more than the lower limit, adhesiveness of the resin composition with a glass member can be enhanced, resulting in an easy enhancement in adhesion force. With the hydroxyl group content equal to or less than the upper limit, dHSP/R can be reduced easily, resulting in an increase in transparency. With the hydroxyl group content in the above-mentioned range, tensile characteristics such as elongation and tensile strength of a resin construct such as a resin film formed from the resin composition can be improved easily. The hydroxyl group content of the polyvinyl acetal resin (A) is more preferably 20% by mol or more, further preferably 23% by mol or more, and still further preferably 33% by mol or less, still further preferably 28% by mol or less, as described above, from the above viewpoints.

The degree of acetylation (amount of acetyl group) of the polyvinyl acetal resin (A) is preferably 0.01% by mol or more, more preferably 0.1% by mol or more, and preferably 30% by mol or less, more preferably 25% by mol or less, further preferably 20% by mol or less. With the degree of acetylation in the above-mentioned range, the hydroxyl group content can be easily adjusted in the above predetermined range. With the degree of acetylation equal to or more than the lower limit, dHSP/R can be easily reduced, resulting in an increase in transparency. With the degree of acetylation equal to or less than the upper limit value, moisture resistance of an interlayer film can be increased. The degree of acetylation is more preferably 0.5% by mol or more, further preferably 0.8% by mol or more, and still further preferably 15% by mol or less, still further preferably 13% by mol or less, from the above viewpoints.

The hydroxyl group content, the degree of acetalization (degree of butyralization), and the degree of acetylation can be calculated from results measured by a method according to JIS K6728 "polyvinyl butyral testing method".

The average degree of polymerization of the polyvinyl acetal resin (A) is preferably 500 or more and 5000 or less. With the average degree of polymerization is adjusted in the above-mentioned range, tensile characteristics such as elongation and tensile strength of a resin construct such as a resin film formed from the resin composition can be improved easily. It is considered that, as the average degree of polymerization is lower, the dissolution sphere radius R tends to be larger and the dHSP/R tends to be lower. The average degree of polymerization of the polyvinyl acetal resin (A) is more preferably 700 or more, further preferably 1000 or more, still further preferably 1500 or more, particularly preferably 1700 or more, and the average degree of polymerization is more preferably 4000 or less, further preferably 3500 or less, still further preferably 3000 or less, from the above viewpoints.

The average degree of polymerization of the polyvinyl acetal resin (A) is the same as the average degree of polymerization of the polyvinyl alcohol serving as a raw material, and can be determined by the average degree of polymerization of the polyvinyl alcohol.

The aldehyde for use in production of the polyvinyl acetal resin (A) is not particularly limited, and an aldehyde having 2 to 10 carbon atoms is generally suitably used. The aldehyde having 2 to 10 carbon atoms is not particularly limited, and examples thereof include acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Among these, an aldehyde having 2 to 6 carbon atoms, such as acetaldehyde, n-butyraldehyde, n-hexylaldehyde, or n-valeraldehyde is preferable, an aldehyde having 2, 3, or 4 carbon atoms is more preferable, and n-butyraldehyde is further preferable. Such an aldehyde may be used singly or in combinations of two or more kinds thereof.

The polyvinyl acetal resin (A) for use in the present invention may be used singly or in combinations of two or more kinds thereof.

<Acrylic-based polymer (B)>

The acrylic-based polymer (B) for use in the present invention is preferably a polymer of a monomer component comprising an acrylic-based monomer (B1) having at least one functional group (X) selected from the group consisting of a hydroxy group, a carboxy group, a thiol group, an amino group, a group having an ether bond, a group having a urethane bond, and a group having an amide bond. The monomer component comprises the acrylic-based monomer (B1) having the functional group (X), which allows the HSP of the monomer component forming the acrylic-based polymer (B) to approach to that of the polyvinyl acetal resin (A), resulting in an easy reduction in dHSP/R.

The acrylic-based monomer (B1) having the functional group (X) in the acrylic-based polymer (B) may be used singly or in combinations of two or more kinds thereof. Such each acrylic-based monomer (B1) may have only one kind of the functional group (X), or two or more kinds thereof.

The functional group (X) is, among these described above, more preferably at least one selected from the group consisting of a hydroxy group, a carboxy group, an amino group, a group having an ether bond, a group having a urethane bond and a group having an amide bond. The functional group (X) is further preferably at least one selected from the group consisting of a hydroxy group, a carboxy group, a group having an ether bond, and a group having a urethane bond, and among these, particularly preferably at least one selected from the group consisting of a hydroxy group and a carboxy group. When at least any of a hydroxy group and a carboxy group adopted as the functional group (X), dHSP/R can be further reduced easily.

The acrylic-based monomer (B1) is a compound having a (meth)acryloyl group, in addition to the functional group (X), and is preferably a monofunctional monomer having one (meth)acryloyl group.

Specific examples of the acrylic-based monomer (B1) having a hydroxy group include hydroxyalkyl (meth)acrylates such as 2-hydroxyethyl (meth)acrylate, 3-hydroxypropyl (meth)acrylate, and 4-hydroxybutyl (meth)acrylate, and phthalic acid ester-based compounds such as 2-acryloyloxyethyl-2-hydroxypropylphthalate and 2-methacryloyloxyethyl-2-hydroxylpropylphthalate. Among these, hydroxyalkyl (meth)acrylate is preferable. The number of carbon atoms in a hydroxyalkyl group in such hydroxyalkyl (meth)acrylate is not particularly limited, and is, for example, 1 to 6, preferably 2 to 4. Such hydroxyalkyl (meth)acrylate is preferably hydroxyalkyl acrylate from the viewpoint of, for example, a decrease in glass transition temperature of the acrylic-based polymer (B).

Herein, the "(meth)acryloyl group" means an acryloyl group or a methacryloyl group, the "(meth)acrylate" means acrylate or methacrylate, and much the same is true on other similar terms.

Examples of the acrylic-based monomer (B1) having a carboxy group include acrylic acid, methacrylic acid, ω-carboxy-polycaprolactone mono(meth)acrylate, 2-(meth)acryloyloxyethyl-succinic acid, 2-(meth)acryloyloxyethylhexahydrophthalic acid, and 2-(meth)acryloyloxyethyl-phthalic acid. The number of repeating units of polycaprolactone in ω-carboxy-polycaprolactone mono(meth)acrylate is about 2 to 5, and is preferably 2 to 3. Such a carboxyl group-containing acrylic-based monomer is preferably ω-carboxy-polycaprolactone mono(meth)acrylate.

Examples of the acrylic-based monomer (B1) (ether bond-containing acrylic-based monomer) where the functional group (X) is a group having an ether bond include cyclic ether group-containing (meth)acrylate. The cyclic ether group-containing (meth)acrylate here used is one having an epoxy ring, an oxetane ring, a tetrahydrofuran ring, a dioxorane ring, or a dioxane ring. Among these, (meth)acrylate containing an epoxy ring or a dioxorane ring is preferable, and dioxorane ring-containing (meth)acrylate is particularly preferable, from the viewpoint of, for example, an adhesion force to glass.

Examples of the epoxy ring-containing (meth)acrylate include glycidyl (meth)acrylate, 2-hydroxyethyl (meth)acrylate glycidyl ether, 3-hydroxypropyl (meth)acrylate glycidyl ether, 4-hydroxybutyl acrylate glycidyl ether, 5-hydroxypentyl (meth)acrylate glycidyl ether, and 6-hydroxyhexyl (meth)acrylate glycidyl ether.

Examples of the oxetane ring-containing (meth)acrylate include (3-methyloxetan-3-yl)methyl (meth)acrylate, (3-propyloxetan-3-yl)methyl (meth)acrylate, (3-ethyloxetan-3-yl)methyl (meth)acrylate, (3-butyloxetan-3-yl)methyl (meth)acrylate, (3-ethyloxetan-3-yl)ethyl (meth)acrylate, (3-ethyloxetan-3-yl)propyl (meth)acrylate, (3-ethyloxetan-3-yl)butyl (meth)acrylate, (3-ethyloxetan-3-yl)pentyl (meth)acrylate, and (3-ethyloxetan-3-yl)hexyl (meth) acrylate.

Examples of the tetrahydrofuran ring-containing (meth)acrylate include tetrahydrofurfuryl (meth)acrylate, γ-butyrolactone (meth)acrylate, and a multimer ester of tetrahydrofurfuryl alcohol and acrylic acid.

Examples of the dioxorane ring-containing (meth)acrylate include (2-methyl-2-ethyl-1,3-dioxoran-4-yl)methyl (meth)acrylate, (2,2-cyclohexyl-1,3-dioxoran-4-yl)methyl (meth)acrylate, (2,2-dimethyl-1,3-dioxoran-4-yl)methyl (meth)acrylate, and (2-methyl-2-isobutyl-1,3-dioxoran-4-yl)methyl (meth) acrylate.

Examples of the dioxane ring-containing (meth)acrylate include (5-ethyl-1,3-dioxan-5-yl)methyl (meth)acrylate.

The ether bond-containing acrylic-based monomer may be polyoxyalkylene-containing (meth)acrylate, and examples include polyethylene glycol monoalkyl ether (meth)acrylates such as diethylene glycol monoethyl ether (meth)acrylate and polyethylene glycol monoethyl ether (meth)acrylate (the number of repeating units of ethylene glycol is, for example, 3 to 20), and polypropylene glycol monoalkyl ether (meth)acrylates.

The ether bond-containing acrylic-based monomer may be alkoxy-containing (meth)acrylates such as 3-methoxybutyl (meth)acrylate.

The ether bond-containing acrylic-based monomer is preferably cyclic ether group-containing (meth)acrylate, and a suitable specific example of the cyclic ether group-containing (meth)acrylate is glycidyl (meth)acrylate or (2-methyl-2-ethyl-1,3-dioxoran-4-yl)methyl (meth)acrylate. Among these, (2-methyl-2-ethyl-1,3-dioxoran-4-yl)methyl (meth)acrylate is more preferable.

Examples of the acrylic-based monomer (B1) (urethane bond-containing acrylic-based monomer) where the functional group (X) is a group having a urethane bond include 1,2-ethanediol-1-(meth)acrylate 2-(N-butylcarbamate).

Examples of the acrylic-based monomer (B1) containing an amino group include N,N-dimethylaminoethyl (meth)acrylate, N,N-dimethylaminoethyl(meth) methacrylate, and N,N-diethylaminoethyl (meth)acrylate.

Examples of the acrylic-based monomer (B1) (amide bond-containing acrylic-based monomer) where the functional group (X) is a group having an amide bond include N,N-dimethyl(meth)acrylamide, N-isopropyl(meth)acrylamide, N,N-diethyl(meth)acrylamide, and N-hydroxy ethyl (meth) acrylamide.

The acrylic-based monomer (B1) may be a polyfunctional monomer having two or more (meth)acryloyl groups. Specific examples include pentaerythritol tri(meth)acrylate, dipentaerythritol penta(meth)acrylate, tetramethylolmethane tri(meth)acrylate, diethylene glycol di(meth)acrylate, triethylene glycol di(meth)acrylate, tetraethylene glycol di(meth)acrylate, dipropylene glycol di(meth)acrylate, tripropylene glycol di(meth)acrylate, and tetrapropylene glycol di(meth)acrylate.

The content of the acrylic-based monomer (B1) having the functional group (X) is preferably 5% by mass or more based on the total amount of the monomer component forming the acrylic-based polymer (B). With the content of 5% by mass or more, the effect due to the acrylic-based monomer (B1) comprised can be exerted, resulting in an easy reduction in dHSP/R. The content of the acrylic-based monomer (B1) is preferably 10% by mass or more, more preferably 50% by mass or more, further preferably 70% by mass or more, from the viewpoint of reducing the dHSP/R to result in an easy increase in transparency of a resin film or the like formed from the resin composition. The monomer component forming the acrylic-based polymer (B) may be fully the acrylic-based monomer (B1), and therefore the content of the acrylic-based monomer (A) is not particularly limited as long as it is 100% by mass or less.

The acrylic-based polymer (B) may be a polymerized product of a monomer component comprising an acrylic-based monomer (B2) having no functional group (X), in addition to the acrylic-based monomer (B1).

The acrylic-based monomer (B2) here used is preferably a monofunctional monomer having one (meth)acryloyloxy group. Examples of the acrylic-based monomer (B2) include alkyl (meth)acrylate, alicyclic structure-containing (meth)acrylate, and aromatic ring-containing (meth)acrylate. Such a monomer may be used singly or in combinations of two or more kinds thereof. Among these, it is preferable to use at least alkyl (meth)acrylate, and it is also preferable to use alkyl (meth)acrylate and aromatic ring-containing (meth)acrylate in combination.

Examples of the alkyl (meth)acrylate include alkyl (meth)acrylate having 1 to 18 carbon atoms. Specific examples include methyl (meth)acrylate, ethyl (meth)acrylate, n-butyl (meth)acrylate, isobutyl (meth)acrylate, tert-butyl (meth)acrylate, n-pentyl (meth)acrylate, n-hexyl (meth)acrylate, n-octyl (meth)acrylate, isooctyl (meth)acrylate, 2-ethylhexyl (meth)acrylate, isodecyl (meth)acrylate, lauryl (meth)acrylate, myristyl (meth)acrylate, isomyristyl (meth)acrylate, stearyl (meth)acrylate, and isostearyl (meth)acrylate. Among these, alkyl (meth)acrylate whose alkyl group has 1 to 12 carbon atoms is preferable, and alkyl acrylate whose alkyl group has 1 to 12 carbon atoms is preferable from the viewpoint of easy adjustment of the glass transition temperature (Tg) in a desired range.

Examples of the alicyclic structure-containing (meth)acrylate include cyclohexyl (meth)acrylate, isobornyl (meth)acrylate, and dicyclopentanyl (meth)acrylate. Examples of the aromatic ring-containing (meth)acrylate include benzyl (meth)acrylate.

The acrylic-based monomer (B2) here used may also be a polyfunctional monomer having two or more (meth)acryloyloxy groups. Examples of such a polyfunctional monomer include trimethylolpropane tri(meth)acrylate, pentaerythritol tetra(meth)acrylate, dipentaerythritol hexa(meth)acrylate, tetramethylolpropane tetra(meth)acrylate, ethylene glycol di(meth)acrylate, propylene glycol di(meth)acrylate, 1,6-hexanediol di(meth)acrylate, 1,9-nonanediol di(meth)acrylate, neopentyl glycol di(meth)acrylate, and 1,3-butylene glycol di(meth)acrylate.

The acrylic-based monomer (B2) may not be used, and therefore, the content of the acrylic-based monomer (B2) may be 0% by mass or more based on the total amount of the monomer component forming the acrylic-based polymer (B). The content of the acrylic-based monomer (B2) is preferably 95% by mass or less, more preferably 90% by mass or less, and may be, for example, 50% by mass or less or may be, for example, 30% by mass or less.

In a case where the acrylic-based monomer (B2) is used, preferably, the content of the acrylic-based monomer (B1) is 5% by mass or more and 70% by mass or less and the content of the acrylic-based monomer (B2) is 30% by mass or more and 95% by mass or less. More preferably, the content of the acrylic-based monomer (B1) is 10% by mass or more and 50% by mass or less and the content of the acrylic-based monomer (B2) is 50% by mass or more and 90% by mass or less.

The monomer component forming the acrylic-based polymer (B) may comprise a vinyl monomer other than the components (B1) and (B2), in addition to the component (B1), or the components (B1) and (B2).

The glass transition temperature (Tg) of the acrylic-based polymer (B) is preferably lower than the glass transition temperature (Tg) of the polyvinyl acetal resin (A). With the glass transition temperature (Tg) of the acrylic-based polymer (B) lower than the glass transition temperature (Tg) of the polyvinyl acetal resin (A), plasticization of the polyvinyl acetal resin (A) can be achieved, resulting in easy improvements in elongation, tensile characteristics, and the like of the resin composition.

The glass transition temperature (Tg) of the acrylic-based polymer (B) is more preferably 40°C or less, further preferably 20°C or less, still further preferably -20°C or less, from the viewpoint of allowing for a lower glass transition temperature (Tg) of the polyvinyl acetal resin (A) and easy improvements in elongation and tensile characteristics of the resin composition. The glass transition temperature (Tg) of the acrylic-based polymer (B) is not particularly limited, and is, for example, -50°C or more, preferably -40°C or more.

In a case where the monomer component forming the acrylic-based polymer (B) is adopted singly, the glass transition temperature (Tg) of the acrylic-based polymer (B) may be determined by producing an acrylic-based homopolymer from the monomer component and measuring the glass transition temperature (Tg) of the homopolymer.

Measurement of the glass transition temperature (Tg) of the acrylic-based homopolymer can be made with detection by performing viscoelasticity measurement with a dynamic viscoelasticity measurement apparatus to measure the shear storage elastic modulus and read the peak temperature at a loss tangent tanδ. The shear storage elastic modulus is measured in conditions of, for example, a shear mode, a rate of temperature rise of 5°C/min, a measurement frequency of 1 Hz, and a strain of 0.08%.

In a case where the monomer component forming the acrylic-based polymer (B) is adopted in combination of a plurality of kinds thereof, the glass transition temperature (Tg) of the acrylic-based polymer (B) can be determined by measurement of the glass transition temperatures (Tg) of respective homopolymers in the same manner as described above, and calculation using the Fox's equation based on such numerical values.

In a case where the glass transition temperature (Tg) of the acrylic-based polymer (B) is measured with the resin composition, the monomer component forming the acrylic-based polymer (A), comprised in the resin composition, and the component rate may be identified by GC-MS, NMR, and/or the like.

The glass transition temperature (Tg) of the polyvinyl acetal resin (A) can also be measured with a dynamic viscoelasticity measurement apparatus in the same conditions as described above.

The weight-average molecular weight of the acrylic-based polymer (B) is not particularly limited, and is, for example, 1000 or more and 1500000 or less, preferably 5000 or more and 1000000 or less, more preferably 10000 or more and 900000, particularly preferably 100000 or more and 800000 or less. With the weight-average molecular weight in the above-mentioned range, tensile characteristics, transparency, and the like can be ensured easily.

The weight-average molecular weight of the acrylic-based polymer is herein a weight-average molecular weight in terms of standard polystyrene as measured by gel permeation chromatography (GPC).

The content of the acrylic-based polymer (B) in the resin composition in the present invention is 20 parts by mass or more and 90 parts by mass or less based on 100 parts by mass of the polyvinyl acetal resin (A). When the content of the acrylic-based polymer (B) is less than 20 parts by mass, a resin construct such as a resin film formed from the resin composition may be insufficient in tensile characteristics such as elongation and tensile strength.

On the other hand, when the content is more than 90 parts by mass, a resin construct such as a resin film formed from the resin composition hardly ensures transparency in a wide temperature range, and is sometimes deteriorated in optical characteristics. Furthermore, deterioration in tensile strength and/or the like may also cause insufficient tensile characteristics.

The content of the acrylic-based polymer (B) is preferably 30 parts by mass or more, more preferably 40 parts by mass or more, and preferably 80 parts by mass or less, more preferably 70 parts by mass or less, from the viewpoint of allowing for not only ensuring of transparency in a wide temperature range, but also excellent elongation and tensile strength.

The resin composition of the present invention may comprise a resin component as a resin component, other than the polyvinyl acetal resin (A) and the acrylic-based polymer (B), as long as the effects of the present invention are exerted. The amount of such other resin component may be herein preferably small. Furthermore, the resin composition preferably comprises no resin component other than the polyvinyl acetal resin (A) and the acrylic-based polymer (B).

Specifically, the total amount of the polyvinyl acetal resin (A) and the acrylic-based polymer (B) is preferably 90% by mass or more based on the total amount of the resin comprised in the resin composition. With the content of 90% by mass or more, a resin film formed from the resin composition and any other resin construct can be easily improved in elongation and tensile strength and transparency in a range from a low temperature to a high temperature can be ensured easily. The total amount of the components (A) and (B) is more preferably 95% by mass or more, further preferably 97% by mass or more, most preferably 100% by mass based on the total amount of the resin.

(Plasticizer)

The resin composition of the present invention may comprise a plasticizer. The resin composition, which comprises a plasticizer, thus can also be flexible and be increased in adhesiveness to glass or the like. However, the resin composition of the present invention preferably comprises no plasticizer, or, even when comprises a plasticizer, comprises it in a small amount. With only a small amount of a plasticizer or no plasticizer comprised, the plasticizer can be prevented from being transferred to cause any failure of the occurrence of clouding on a resin material such as organic glass in a case where the resin composition of the present invention, which is laminated on such a resin material such as organic glass, is used.

Even when the amount of a plasticizer in the resin composition of the present invention is small, with the resin composition comprising not only the polyvinyl acetal resin (A) but also the acrylic-based polymer (B) as described above, the resin composition can be not only flexible, but also excellent in adhesion force.

The content of the plasticizer in the resin composition is preferably 10 parts by mass or less, more preferably 5 parts by mass or less, further preferably 3 parts by mass or less, still further preferably 1 part by mass or less based on 100 parts by mass in total of the polyvinyl acetal resin (A) and the acrylic-based polymer (B). The lower limit of the content of the plasticizer is 0 parts by mass, and, most preferably, the resin composition of the present invention comprises no plasticizer, namely, the content of the plasticizer is 0 parts by mass.

Examples of the plasticizer include organic ester plasticizers, and phosphorus plasticizers such as an organic phosphate plasticizer and an organic phosphite plasticizer. The plasticizer may be used singly or in combinations of two or more kinds thereof. Among these, an organic ester plasticizer is preferable. Examples of the organic ester plasticizer include a monobasic organic acid ester and a polybasic organic acid ester.

Examples of the monobasic organic acid ester include an ester of glycol and monobasic organic acid. Examples of the glycol include polyalkylene glycol where each alkylene unit has 2 to 4 carbon atoms, preferably 2 or 3 carbon atoms and the number of alkylene units repeated is 2 to 10, preferably 2 to 4. The glycol may also be a monoalkylene glycol (namely, the number repeated is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specific examples include butyric acid, isobutyric acid, capronic acid, 2-ethylbutyric acid, heptyl acid, n-octyl acid, 2-ethylhexanoic acid, n-nonyl acid, and decyl acid.

Specific examples of the monobasic organic acid include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2-ethylbutyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be linear, may have a branched structure, or may have a cyclic structure.

Specific examples include dibutyl sebacate, dioctyl azelate, dihexyl adipate, dioctyl adipate, hexyl cyclohexyl adipate, diisononyl adipate, heptyl nonyl adipate, dibutyl carbitol adipate, and a mixed adipic acid ester. An oil-modified sebacic acid alkyd may also be adopted. Examples of the mixed adipic acid ester include an adipic acid ester produced from two or more alcohols selected from the group consisting of an alkyl alcohol having 4 to 9 carbon atoms and a cyclic alcohol having 4 to 9 carbon atoms.

Examples of the organic phosphorus plasticizer include phosphoric acid esters such as tributoxyethyl phosphate, isodecylphenyl phosphate, and triisopropyl phosphate.

Among these described above, the plasticizer here used is particularly suitably triethylene glycol-di-2-ethylhexanoate (3GO).

The resin composition may appropriately comprise a known additive used in combination with the polyvinyl acetal resin and the acrylic resin, other than the plasticizer. Specific examples include an ultraviolet absorbing agent, an infrared absorbing agent, an antioxidant, a light stabilizer, an adhesion force modifier, a pigment, a dye, a fluorescent brightener, and a crystal nucleating agent. For example, a polymerization initiator for use in polymerization of the acrylic-based polymer (B) may also remain in the resin composition, as described below. The resin composition of the present invention may also be diluted by a solvent and thus used in the form of a diluted liquid.

(Phase separation structure)

The resin composition of the present invention comprises a mixture of the polyvinyl acetal resin (A) and the acrylic-based polymer (B), and is low in dHSP/R and high in compatibility, as described above, and thus the resin (A) and the polymer (B) form no phase separation structure, or, even when form a phase separation structure, form a micro phase separation structure having a decreased size. The resin composition, when has no phase separation structure or forms a micro phase separation structure, hardly causes reflection or refraction at an interface between phases regardless of an environment temperature, and thus can be excellent in transparency in a range from a low temperature to a high temperature.

The phase separation structure is, for example, a sea-island structure, the average size with respect to the island portion in the sea-island structure is more preferably smaller, and is preferably 60 nm or less, more preferably 50 nm or less, further preferably 40 nm or less. Herein, it is preferable as described above not to form the phase separation structure, and in this case, the average size with respect to the island portion is 0 nm.

The average size with respect to the island portion is here measured by forming a specimen of the resin composition into an ultrathin section by a microtone, staining the ultrathin section with osmium, and observing the resultant with a transmission-type electron microscope. The average size with respect to the island portion is the average value with respect to the longer size of such each island portion. The longer size refers to the length of the longest portion in such each island portion in microscope observation. The average size is the average value in measurement of the respective sizes of any 2000 of such island portions.

In the case of the sea-island structure, the polyvinyl acetal resin (A) may constitute the sea portion and the acrylic-based polymer (B) may constitute the island portion. With the polyvinyl acetal resin (A) corresponding to the sea portion and the acrylic-based polymer (B) corresponding to the island portion, mechanical strength such as tensile strength can be ensured sufficiently. The sea-island structure may be in the form of a so-called salami structure where a resin other than the resin forming the island portion is further incorporated into the island portion.

[Method for preparing resin composition]

The method for preparing the resin composition of the present invention may involve, for example, mixing the polyvinyl acetal resin (A) and the acrylic-based polymer (B) synthesized in advance (hereinafter, also referred to as "first method").

The acrylic-based polymer (B) may also be prepared by synthesis in the presence of the polyvinyl acetal resin (A). In other words, the resin composition may also be prepared by mixing the polyvinyl acetal resin (A) and a monomer component for forming the acrylic-based polymer (B), to provide a mixture, and polymerizing the monomer component in the mixture to thereby synthesize the acrylic-based polymer (B) (hereinafter, also referred to as "second method").

The resin composition is preferably prepared by the second method. According to the second method, the acrylic-based polymer (B) and the polyvinyl acetal resin (A) are sufficiently compatible also in cooperation with a low dHSP/R, and no phase separation structure is formed as described above or, when a phase separation structure is formed, the structure is a micro structure.

The monomer component for forming the acrylic-based polymer (B) may be polymerized in the presence of a polymerization initiator. Accordingly, the second method may involve further adding a polymerization initiator to a mixture comprising the polyvinyl acetal resin (A) and the monomer component for forming the acrylic-based polymer (B), and polymerizing the monomer component in the mixture.

The acrylic-based polymer (B) can be synthesized by polymerizing the monomer component by a free radical polymerization method, a living radical polymerization method, or the like, but not particularly limited thereto. The polymerization initiator here used may be, for example, an organic peroxidebased polymerization initiator or an azo-based polymerization initiator in a free radical polymerization method. An organotellurium polymerization initiator, a nitroxide-based initiator, or the like may be used in a living radical polymerization method. When polymerization is made, a chain transfer agent may be used in addition to the polymerization initiator. Polymerization may also be made by irradiation with active energy ray, and in this case, the polymerization initiator here used may be a photo-polymerization initiator.

The acrylic-based polymer (B) may be obtained by polymerization according to, for example, a solution polymerization method or a suspension polymerization method, or may be obtained by polymerization with active energy ray, as described above, and is preferably obtained by polymerization according to a solution polymerization method or polymerization with active energy ray, and among them, more preferably obtained by polymerization with active energy ray.

The active energy ray is not limited as long as the monomer component can be polymerized, and examples include ionizing radiations such as ultraviolet light, electron beam, α-ray, β-ray, and γ-ray. Among these, ultraviolet light (UV) or electron beam is preferable from the viewpoints of curing ability and convenience.

Examples of the photo-polymerization initiator for use in polymerization with active energy ray include benzophenone-based compounds such as benzophenone, acetophenone-based compounds such as α-aminoalkylphenone and α-hydroxyalkylphenone, acylphosphine oxide-based compounds, titanocenebased compounds, oxime ester-based compounds, benzoin ether-based compounds, and thioxanthone. Among these, a benzophenone-based compound is preferable. When polymerization is made by electron beam, no photo-polymerization initiator described above may be comprised.

The amount of the photo-polymerization initiator compounded is preferably 0.05 parts by mass or more and 5 parts by mass or less, more preferably 0.1 parts by mass or more and 2.5 parts by mass or less based on 100 parts by mass of the monomer component for forming the acrylic-based polymer (B). With the amount of the photo-polymerization initiator compounded equal to or more than the lower limit, photo-curing ability of the monomer component can be improved. With the amount equal to or less than the upper limit value, photo-curing ability corresponding to the amount compounded can be exhibited.

In a case where polymerization is made by irradiation with the active energy ray, the second method may involve mixing the monomer component for forming the acrylic-based polymer (B) and the polyvinyl acetal resin (A) to provide a mixture, and irradiating the mixture with the active energy ray to polymerize the monomer component, thereby synthesizing the acrylic-based polymer (B). The mixture of the monomer component and the polyvinyl acetal resin (A) may be diluted with a solvent, and preferably is not diluted. The mixture, even when not diluted with a solvent, comprises the monomer component and thus can be in the form of a liquid or can increase fluidity, and polymerization and formation thereof are facilitated.

The mixture may be formed into a desired shape such as a film shape by, for example, coating, extrusion, and/or press forming, and then irradiated with the active energy ray. Thus, the mixture is cured by polymerization of the monomer component due to irradiation with the active energy ray, and then is formed into a resin construct having a desired shape such as a film shape.

In a case where polymerization is made with the active energy ray, the amount of irradiation with the active energy ray is not particularly limited, and is, for example, preferably 2000 mJ/cm$^2$ or more and 10000 mJ/cm$^2$ or less, more preferably 6000 mJ/cm$^2$ or more and 9000 mJ/cm$^2$ or less.

The polymerization initiator may be further added to the mixture comprising the monomer component for forming the acrylic-based polymer (B), and the polyvinyl acetal resin (A), as described above.

In a case where other additive such as a plasticizer, and other resin component than the acrylic-based polymer (B) and the polyvinyl acetal resin (A) are compounded into the resin composition, these may be added to the mixture.

The mixture is obtained by loading the resin (A), the monomer component for forming the polymer (B), the polymerization initiator, and such other additive such as a plasticizer and such other resin component, if necessary, compounded, into a mixing machine, and mixing them in the mixing machine. The mixing machine is not particularly limited, and a known stirring machine such as a rotation-revolution mixer or a stirring machine provided with a stirring blade may be used, or a kneading machine such as an extruder, a kneader, or a plastomill may be used.

[Resin film]

The resin composition of the present invention may be used in any form, and is preferably used in the form of a film. In other words, the present invention provides a resin film formed of the resin composition, as a preferable aspect. The resin composition comprises the mixture of the polyvinyl acetal resin (A) and the acrylic-based polymer (B), as described above, and the dHSP/R of the monomer component forming the acrylic-based polymer (B) relative to the resin (A) is low. Accordingly, the resin film of the present invention can be not only improved in tensile characteristics such as elongation and tensile strength, but also improved in transparency in a range from a low temperature to a high temperature. Herein, the resin film widely refers to not only a case of a single resin film, but also a case where a resin film is, for example, laminated on or covered with other member and thus is layered or film-shaped, and also refers to a relatively thick resin film commonly called a sheet.

The thickness of the resin film formed of the resin composition of the present invention may be appropriately selected depending on the application and the like, and is, for example, 100 μm or more and 2000 μm or less. The thickness of the resin film is preferably 250 μm or more and 900 μm or less. With the thickness of the resin film in such a range, the resin film can be suitably used in, for example, an interlayer film for laminated glass.

The resin film of the present invention may be of a single layer, or may form a multilayer film. The multilayer film may have at least one layer of the resin film of the present invention. In other words, the multilayer film may be a laminate of the resin film formed from the resin composition of the present invention, and a resin film formed from a composition other than the resin composition of the present invention. The multilayer film may also be laminate having two or more layers of the resin film formed from the resin composition of the present invention, and also in this case, the laminate may have a resin film formed from a composition other than the resin composition of the present invention.

The resin film of the present invention may be used in an application where transparency, light permeability, and the like are demanded, may be used for a transparent protective film used in protection of an optical member and the like, a film for an optical member, forming a portion of an optical member, a resin film for glass, used for glass, an adhesive film, a pressure-sensitive adhesive film, a dispersant for an optical member, a binder for an optical member, and the like, and is preferably used for a resin film for glass.

The resin film of the present invention, when used for a resin film for glass, may be provided on at least one surface of such glass. The resin film of the present invention may be of a single layer, the resin film as a single layer being laminated on a glass surface, or may be laminated in the form of a multilayer film on a glass surface. The multilayer film is preferably placed at a position where the resin film of the present invention is in contact with glass, and thus directly laminated on the glass, but is not required to be directly laminated.

The resin film of the present invention particularly preferably forms an interlayer film for laminated glass. In other words, the resin film of the present invention, and the multilayer film comprising the resin film of the present invention are each preferably disposed between a pair of glass members and used for an interlayer film which allows the pair of glass members to adhere. The resin composition of the present invention may be used in any form other than a film, as described above.

(Method for producing resin film)

The resin film of the present invention may be produced by forming the mixture comprising the polyvinyl acetal resin (A) and the monomer component for forming the acrylic-based polymer (B), into a film, with the monomer component being polymerized, as described above.

The resin film may also be produced by subjecting the resin composition produced in advance, to extrusion, press forming, or the like. The resin film of the present invention may also be produced by a forming method by coating a release sheet or the like with the resin composition or a diluted liquid thereof and drying the resultant. In a case where the thickness of the resin film is insufficient by one film formation in a case of formation by coating or the like, the resin film may be obtained in the form of one resin film by making a plurality of films and stacking the plurality of films for integration due to compression bonding or the like.

In a case where the multilayer film is obtained, the multilayer film may be obtained as one multilayer film by stacking a plurality of films comprising the resin film of the present invention, for integration due to compression bonding or the like, or the multilayer film may be produced by any other method.

[Glass laminate]

The resin film of the present invention is preferably used for glass, as described above, namely, the present invention also provides a glass laminate comprising a glass member and a resin film, as a preferable aspect.

The glass laminate of the present invention comprises at least one glass member, and the resin film of the present invention, in which the resin film may be provided on at least one surface of the glass member. The resin film of the present invention may be of a single layer, the resin film as a single layer being laminated on the glass member, or a multilayer film comprising the resin film of the present invention may be laminated on the glass member, as described above. The multilayer film is preferably placed at a position where the resin film of the present invention is in contact with glass, and thus directly laminated on the glass, but may not be directly laminated.

The resin composition of the present invention can be improved in adhesiveness to glass, and thus can be laminated on the glass member at a high adhesion force. The glass member can be allowed to adhere to other member with the resin film laminated on the glass member or the multilayer film being interposed therebetween.

The glass laminate is preferably laminated glass. The laminated glass comprises the resin film of the present invention, and a pair of opposed glass members, in which the resin film of the present invention is disposed between the pair of glass members. The resin film of the present invention in the laminated glass may have a single layer structure between the pair of glass members, and in this case, the pair of glass members may adhere to the resin film of the present invention and thus be integrated.

The resin film of the present invention may form the multilayer film between the pair of glass members. In this case, the pair of glass members may adhere to the multilayer film and thus be integrated. The resin film of the present invention may be placed at a position so as to be in contact with such a glass member and thus be directly laminated on such a glass member, or may not be directly laminated on such a glass member, but is preferably directly laminated.

The resin composition of the present invention can be improved in adhesiveness to glass, and thus the resin film formed of the resin composition of the present invention can be used for an interlayer film for laminated glass to allow the pair of glass members to adhere at a high adhesion force.

The glass member in the glass laminate is selected from the group consisting of inorganic glass and organic glass. Similarly, each of the pair of glass members in the laminated glass is any selected from the group consisting of inorganic glass and organic glass.

At least one of the glass members is preferably organic glass in the glass laminate and the laminated glass of the present invention. The resin composition of the present invention comprising no plasticizer or comprises only a small amount of a plasticizer can prevent organic glass from clouding as described above, and thus can be effectively used for organic glass.

One of the pair of glass members in the laminated glass may be organic glass and another thereof may be inorganic glass, or both the pair of glass members may be each organic glass. Of course, both the pair of glass members may be each inorganic glass.

The inorganic glass is not particularly limited, and examples thereof include various glass plates of float plate glass, reinforced glass, colored glass, polished plate glass, template glass, wire plate glass, lined plate glass, ultraviolet absorbing plate glass, infrared reflection plate glass, infrared absorbing plate glass, green glass, and the like. The inorganic glass may be, for example, surface-treated. The thickness of the inorganic glass is not particularly limited, and is preferably 0.1 mm or more, further preferably 1.0 mm or more, and preferably 5.0 mm or less, further preferably 3.2 mm or less.

The organic glass is not particularly limited, and examples thereof include various organic glass plates such as a polycarbonate plate, a methacrylate plate such as polymethyl methacrylate plate, an acrylonitrilestyrene copolymer plate, an acrylonitrile-butadiene-styrene copolymer plate, a poly ester plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, and a polyimide resin plate. The organic glass may be appropriately surface-treated.

Among these described above, a polycarbonate plate is preferable from the viewpoint of being excellent in transparency, impact resistance, and burning resistance, and a methacrylate plate such as a polymethyl methacrylate plate is preferable and, among these, polycarbonate plate is preferable, from the viewpoint of being high in transparency and excellent in weather resistance and mechanical strength.

A specific thickness of the organic glass is not particularly limited, and is preferably 0.1 mm or more, further preferably 0.3 mm or more, and preferably 5.0 mm or less, further preferably 3.0 mm or less.

The glass laminate and the laminated glass of the present invention can be used in various fields. Specifically, the glass laminate and the laminated glass are used in window glass for wheeled vehicles such as automobiles and trains, various vehicles such as marine vessels and airplanes, various architectural structures such as buildings, condominium buildings, detached houses, halls, and gymnastic halls, working machines for cutting, polishing, and the like, or constructing machines such as shovels and cranes.

[Method for producing glass laminate]

A glass laminate where a resin film or a multilayer film is provided on one surface of a glass member may be produced by placing the resin film or the multilayer film of the present invention on a surface of a glass member, and performing adhesion to the glass member due to thermocompression bonding or the like.

The laminated glass can be produced by placing the resin film of the present invention, produced in advance, between a pair of glass members, and performing thermocompression bonding or the like. In a case where the interlayer film in the laminated glass of the present invention is a multilayer film, the multilayer film may be produced in advance and the multilayer film may be placed between the pair of glass members. A plurality of the resin films may be stacked between the pair of glass members to integrate the plurality of the resin films, thereby providing a multilayer film, and the pair of glass members may be integrated with the multilayer film being interposed therebetween.

When the laminated glass is produced, any air remaining between the pair of glass members may be, if necessary, subjected to degassing after placing the resin film, the multilayer film, or a plurality of the resin films between the pair of glass members and before thermocompression bonding. The method for degassing is not particularly limited, and may be performed by passing through a pressing roll or charging into a rubber bag and evacuation under reduced pressure.

Temporary adhesion may be performed before thermocompression bonding. Such temporary adhesion may be performed by, for example, placing the resin film, the multilayer film, or a plurality of the resin films between the pair of glass members and pressing the resultant at a relatively low pressure with, if necessary, heating. Such temporary adhesion may be performed by, for example, a vacuum laminator. Such temporary adhesion may be performed after degassing or together with degassing in a case where degassing is performed.

The method for thermocompression bonding is not particularly limited, and pressure may be applied with heating of the resin film or the like placed between the pair of glass members. The heating temperature is preferably 60°C or more and 150°C or less, more preferably 70°C or more and 140°C or less. The pressure is preferably 0.4 MPa or more and 1.5 MPa or less, more preferably 0.5 MPa or more and 1.3 MPa or less. The pressure here mentioned is an absolute pressure. Examples of such thermocompression bonding include a method with an autoclave and a method with hot pressing, and a method with an autoclave is preferable.

Examples

The present invention is described in more detail with reference to Examples, but the present invention is not limited to these Examples at all.

The measurement method and the evaluation method of each physical property value in the present invention are as follows.

<Method for calculating dHSP/R>

The polyvinyl acetal resin (A) was subjected to a solubility test of each of fifteen solvents each having a known HSP, as shown below. The HSP of the polyvinyl acetal resin (A) was determined from the solubility by use of software "HSPiP 5th Edition ver.5.0.09" of Hansen Solubility Parameters (http://hansensolubility.com). In a case where the polyvinyl acetal resin (A) was assumed to be in the form of a single dissolution sphere, fitting could not be made, and thus fitting was made with two dissolution spheres under the assumption of Double Sphere by Generic Algorithm of the software.

The HSP of the monomer component forming the acrylic-based polymer (B) was calculated from a molecule structure according to the Y-MB method of the software. The HSP of the entire monomer component was calculated.

(Solubility test)

0.1 g of the polyvinyl acetal resin (A) formed into a sheet having a thickness of 800 $\mu$m was collected and dispersed in 3 mL of each solvent shown below, and shaken with a shaking machine "MULTI SHAKER MMS" (manufactured by EYELA) in conditions of ordinary temperature, 48 hours, and 130 rpm. One completely dissolved and one not completely dissolved, but dissolved to such an extent that the original form was not observed were respectively defined as Ranks 1 and 2. One having a swelling rate of 1000% or more, one having a swelling rate of 100% or more and less than 1000%, one having a swelling rate of 10% or more and less than 100%, and one having a swelling rate of less than 10% were respectively defined as Ranks 3, 4, 5, and 6. Ranks 1 and 2 were rated as soluble, and Rank 3 and worse Ranks were rated as insoluble. Ranks 1 and 2 were visually determined, and Ranks 3, 4, and 5 were each determined by measuring the mass w1 of each sample before the solubility test and the mass w2 of such each sample after the test and calculating 100 $\times$ (w2 - w1)/w1 (%) as the swelling rate.

(Fifteen solvents subjected to solubility test)

butyl acetate, ethyl acetate, acetone, toluene, THF, methanol, ethanol, IPA, 2-ethylhexanol, diethylene glycol, NMP, oleic acid, pure water, hexane, and MEK

<Glass transition temperature (Tg) of acrylic-based polymer (B)>

Each homopolymer of the monomer component forming the acrylic-based polymer (B) was produced, and the glass transition temperature (Tg) of such each homopolymer was measured with a dynamic viscoelasticity measurement apparatus (apparatus name DVA-200, manufactured by IT Keisoku Seigyo Co., Ltd.) according to the method described herein. In a case where the acrylic-based polymer (B) was a homopolymer, the glass transition temperature (Tg) measured was defined as the glass transition temperature (Tg) of the acrylic-based polymer (B). In a case where the acrylic-based polymer (B) was a copolymer formed from a plurality of monomer components, the glass transition temperatures (Tg) of respective homopolymers of the monomer components were measured in advance and numerical values thereof were subjected to calculation with the Fox's equation. Such a homopolymer was obtained by polymerization in the presence of a photo-polymerization initiator in the same polymerization conditions as in Examples described below.

<Measurement of size of sea-island structure>

The resin film comprising the resin composition was treated with a microtone, to produce a section having a thickness of about 100 nm. The section obtained was stained with osmium tetroxide, and observed at a magnification of 15000 or 50000 with a transmission-type electron microscope. Each sea portion and each island portion were identified by image analysis software "WinROOF 2015", and the average of the longer sizes of 1000 island portions was measured.

<Haze value>

The haze (%) of each laminated glass obtained in Examples and Comparative Examples was measured with a temperature-modulated haze meter (trade name "THM-150FL", manufactured by Murakami Color Research Laboratory Co., Ltd.). The haze was measured under an environment at each temperature of -30, -20, -10, 0, 10, 20, 30, 40, 50, 60, 70, and 80°C in a constant temperature bath, and rated according to the following evaluation criteria.

A: a haze of less than 0.5 at all the temperatures.
B: a haze of less than 1.1 at all the temperatures, but a haze of 0.5 or more and less than 1.1 under at least one temperature condition.

C: a haze of 1.1 or more under at least one temperature condition.

<Tensile test>

Each resin film obtained in Examples and Comparative Examples was punched by #4 dumbbell, and humidity conditioning was made in conditions of a temperature of 23°C, a humidity of 50% RH, and 24 hours. The breaking elongation and the breaking strength (maximum stress) of such each resin film were measured at a rate of 200 mm/min and at a distance between chucks of 5 cm under an environment of at a temperature of 23°C and a humidity of 50% RH. The breaking elongation and the breaking strength (maximum stress) were each rated according to the following evaluation criteria.

(Breaking elongation)

A: 200% or more
B: 130% or more and less than 200%
C: less than 130%

(Breaking strength (maximum stress))

A: 30 MPa or more
B: 25 MPa or more and less than 30 MPa
C: less than 25 MPa

Each component used in Examples and Comparative Examples is as follows.

<Polyvinyl acetal resin (A)>

Polyvinyl acetal resin (1): polyvinyl butyral resin, an average degree of polymerization of 1700, a degree of acetylation of 1 mol%, a hydroxyl group content of 32 mol%, and a degree of acetalization of 67 mol%
Polyvinyl acetal resin (2): polyvinyl butyral resin, an average degree of polymerization of 3000, a degree of acetylation of 12 mol%, a hydroxyl group content of 24 mol%, and a degree of acetalization of 64 mol%
Polyvinyl acetal resin (3): polyvinyl butyral resin, an average degree of polymerization of 1700, a degree of acetylation of 1 mol%, a hydroxyl group content of 30.6 mol%, and a degree of acetalization of 68.5 mol%
Polyvinyl acetal resin (4): polyvinyl butyral resin, an average degree of polymerization of 800, a degree of acetylation of 0.9 mol%, a hydroxyl group content of 34 mol%, and a degree of acetalization of 65.1 mol%

<Monomer component forming acrylic-based polymer (B)>

Ethyl acrylate: manufactured by Nippon Shokubai Co., Ltd.
Butyl acrylate: manufactured by Nippon Shokubai Co., Ltd.
2-Ethylhexyl acrylate: manufactured by Nippon Shokubai Co., Ltd.
Benzyl acrylate: manufactured by Osaka Organic Chemical Industry Ltd.
4-Hydroxybutyl acrylate: manufactured by Osaka Organic Chemical Industry Ltd.
ω-Carboxy-polycaprolactone monoacrylate: product name "M-5300", manufactured by Toagosei Co., Ltd.
Glycidyl acrylate: manufactured by FUJIFILM Wako Pure Chemical Corporation
Lauryl acrylate: manufactured by Osaka Organic Chemical Industry Ltd.
Acrylic acid: manufactured by Nippon Shokubai Co., Ltd.
Tripropylene glycol diacrylate: product name "APG-200" manufactured by Shin-Nakamura Chemical Co., Ltd.

<Photo-polymerization initiator>

Benzophenone: manufactured by FUJIFILM Wako Pure Chemical Corporation

<Plasticizer>

3GO: triethylene glycol-di-2-ethylhexanoate

[Example 1]

Polyvinyl butyral resin (1) and the monomer component for forming the acrylic-based polymer (B), compounded as shown in Table 1, were loaded to a container heated to 160°C, by use of labo plastomill (manufactured by Toyo Seiki Seisaku-sho, Ltd.). The amounts of compounding here were adjusted so that the proportions of the polyvinyl butyral resin (A) and the acrylic-based polymer (B) obtained from the monomer component, expressed by parts by mass, were as shown in Table 1. Moreover, 0.2 parts by mass of benzophenone as a photo-polymerization initiator based on 100 parts by mass of the monomer component was added to the container, and mixed at 50 rpm for 5 minutes. Next, the mixture obtained was formed into a film by press forming, and thereafter irradiated with ultraviolet light in a condition of 8000 mJ/cm$^2$, to thereby polymerize the monomer component, obtaining a resin film formed of a resin composition comprising the polyvinyl butyral resin (A) and the acrylic-based polymer (B). The thickness of the resin film was 800 $\mu$m. The resin film was formed into an ultrathin section by the above method, and stained and observed, and the resin composition forming the resin film had a sea-island structure and the average longer size with respect to the island section was 35 nm.

(Production of laminated glass)

The resin film obtained above was cut to a predetermined size, and laminated between two sheets of float glass (trade name "soda glass", manufactured by Hiraoka Special Glass Mfg. Co., Ltd., glass size: 7.5 cm width × 7.5 cm length × 1.1 mm thickness). A laminate was pressed with a vacuum laminator (trade name "PVL0505S", manufactured by Nisshinbo Mechatronics Inc.) at 80°C and a set pressure of 100 kPa for 10 minutes, to obtain a laminate of temporary adhesion. The laminate of temporary adhesion, obtained above, was heated and pressurized with an autoclave (product name "HP5050MAH-H14", manufactured by Kyosin Engineering Corporation) in conditions of 140°C and 1.3 MPa to perform thermocompression bonding of such two glass plates with the resin film being interposed, thereby obtaining laminated glass.

[Example 2]

The same manner as in Example 1 was performed except that compounding of the monomer component for forming the acrylic-based polymer (B) loaded into the labo plastomill was as shown in Table 1 and the amounts of compounding of polyvinyl butyral resin (1) and the acrylic-based polymer (B) obtained from the monomer component, expressed by parts by mass, were adjusted so as to be at proportions shown in Table 1. The resin composition had a sea-island structure and the average longer size with respect to the island section was 36 nm.

[Example 3]

The same manner as in Example 1 was performed except that polyvinyl acetal resin (2) was used as the polyvinyl acetal resin (A) and compounding of the monomer component for forming the acrylic-based polymer (A) was changed as shown in Table 1. The resin composition had a sea-island structure and the average longer size with respect to the island section was 32 nm.

[Example 4]

The same manner as in Example 3 was performed except that the amounts of compounding of the polyvinyl butyral resin (A) and the acrylic-based polymer (B), expressed by parts by mass, were adjusted so as to be at proportions shown in Table 1. The resin composition had a sea-island structure and the average longer size with respect to the island section was 30 nm.

[Example 5]

The same manner as in Example 4 was performed except that a plasticizer was loaded, together with the polyvinyl acetal resin (A) and the monomer component for forming the acrylic-based polymer (B), to the labo plastomill at compounding proportions shown in Table 1 to thereby allow the resin composition to comprise the plasticizer. The resin composition had a sea-island structure and the average longer size with respect to the island section was 29 nm.

[Comparative Example 1]

The same manner as in Example 1 was performed except that compounding of the monomer component for forming the acrylic-based polymer (B) loaded into the labo plastomill was as shown in Table 1 and the amounts of compounding of polyvinyl butyral resin (1) and the acrylic-based polymer (B), expressed by parts by mass, were adjusted so as to be at proportions shown in Table 1.

[Comparative Example 2]

The same manner as in Comparative Example 1 was performed except that the amounts of compounding of the polyvinyl butyral resin (A) and the acrylic-based polymer (B), expressed by parts by mass, were adjusted so as to be at proportions shown in Table 1.

[Comparative Example 3]

The same manner as in Example 1 was performed except that compounding of the monomer component for forming the acrylic-based polymer (B) loaded into the labo plastomill was as shown in Table 1 and the amounts of compounding of polyvinyl butyral resin (1) and the acrylic-based polymer (B), expressed by parts by mass, were adjusted so as to be at proportions shown in Table 1.

[Comparative Example 4]

Polyvinyl butyral resin (3) was used instead of polyvinyl butyral resin (1). The same manner as in Example 1 was performed except that compounding of the monomer component for forming the acrylic-based polymer (B) loaded into the labo plastomill was as shown in Table 1 and the amounts of compounding of polyvinyl butyral resin (4) and the acrylic-based polymer (B), expressed by parts by mass, were adjusted so as to be at proportions shown in Table 1.

[Comparative Example 5]

The same manner as in Example 1 was performed except that compounding of the monomer component for forming the acrylic-based polymer (B) loaded into the labo plastomill was as shown in Table 1, polyvinyl butyral resin (4) was used as the polyvinyl acetal resin, and the amounts of compounding of polyvinyl butyral resin (4) and the acrylic-based polymer (B), expressed by parts by mass, were adjusted so as to be at proportions shown in Table 1.

[Table 1]

| | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| Polyvinyl acetal resin (A) | | Content (parts by mass) | 100 | 100 | 100 | 100 | 100 | 100 | 100 | 100 | 100 | 100 |
| | | Average degree of polymerization | 1700 | 1700 | 3000 | 3000 | 3000 | 1700 | 1700 | 1700 | 1700 | 800 |
| | | Degree of acetylation (% by mol) | 1 | 1 | 12 | 12 | 12 | 1 | 1 | 1 | 1 | 0.9 |
| | | Hydroxyl group content (% by mol) | 32 | 32 | 24 | 24 | 24 | 32 | 32 | 32 | 30.6 | 34 |
| | | Degree of acetalization (% by mol) | 67 | 67 | 64 | 64 | 64 | 67 | 67 | 67 | 68.5 | 65.1 |
| | | Type | (1) | (1) | (2) | (2) | (2) | (1) | (1) | (1) | (3) | (4) |
| | Content (parts by mass) | | 70 | 50 | 70 | 40 | 40 | 50 | 30 | 100 | 100 | 150 |

(continued)

| | | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|---|
| Composition of resin composition | Acrylic-based polymer B) | Monomer component (% by mass) | Ethyl acrylate | | | | | | | | | 60 | 26.1 |
| | | | Butyl acrylate | | | | | | | | | 14.2 | 37.4 |
| | | | 2-Ethylhexyl acrylate | | | | | | | | 80 | | |
| | | | Benzyl acrylate | | 49.8 | | | | 100 | 100 | | 25.2 | 16.5 |
| | | | 4-Hydroxybutyl acrylate | 100 | 10.0 | | | | | | | | 10 |
| | | | ω-Carboxy-poly-caprolactone monoacrylate | | | 100 | 100 | 100 | | | | | |
| | | | Glycidyl methacrylate | | | | | | | | 13.2 | | |
| | | | Lauryl acrylate | | 40.2 | | | | | | | | |
| | | | Acrylic-based acid | | | | | | | | 6.8 | | 10 |
| | | | Tripropylene glycol diacrylate | | | | | | | | | 0.6 | |
| | | Glass transition temperature (Tg)(°C) | | -15.7 | 17.7 | -21.4 | -21.4 | -21.4 | 19.4 | 19.4 | -29.1 | -5.8 | -8.0 |
| | | dHSP/R relative to polyvinyl acetal resin (A) | | 0.82 | 1.13 | 0.59 | 0.59 | 0.59 | 1.19 | 1.19 | 1.58 | 1.22 | 0.73 |

19

(continued)

| | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| | Plasticizer | Type | | | | | 3GO | | | 3GO | 3GO | 3GO |
| | | Content (parts by mass) based on 100 parts by mass in total of resin (A) and polymer (B) | | | | | 5 | | | 10 | 7 | 5 |
| Evaluation | Haze | | B | B | A | A | A | C | C | C | C | B |
| | Breaking elongation | | B | B | A | B | A | C | C | B | B | A |
| | Breaking strength (maximum stress) | | A | A | B | A | B | B | B | C | C | C |

EP 3 985 068 A1

As shown in Examples above, the dHSP/R of the monomer component for forming the acrylic-based polymer (B) relative to the polyvinyl acetal resin (A) was equal to or less than a predetermined value and the content of the acrylic-based polymer (B) was in a predetermined range, to thereby allow for a favorable haze value in a range from a low temperature to a high temperature and excellent transparency. Moreover, the resin film was increased in breaking elongation and breaking stress and was also excellent in tensile characteristics.

## Claims

1. A resin composition comprising a polyvinyl acetal resin (A) and an acrylic-based polymer (B),

   the acrylic-based polymer (B) being a polymer of a monomer component comprising an acrylic-based monomer,
   a dHSP/R of the monomer component relative to the polyvinyl acetal resin (A) being 1.16 or less, and
   a content of the acrylic-based polymer (B) being 20 parts by mass or more and 90 parts by mass or less based on 100 parts by mass of the polyvinyl acetal resin (A).

2. The resin composition according to claim 1, wherein the monomer component comprises an acrylic-based monomer (B1) having at least one functional group (X) selected from the group consisting of a hydroxy group, a carboxy group, a thiol group, an amino group, a group having an ether bond, a group having a urethane bond, and a group having an amide bond.

3. The resin composition according to claim 2, wherein the acrylic-based monomer (B1) comprises at least any of an acrylic-based monomer (B1) having a hydroxy group or an acrylic-based monomer (B1) having a carboxy group.

4. The resin composition according to claim 3, wherein the acrylic-based monomer (B1) having a hydroxy group is hydroxyalkyl (meth)acrylate, and the acrylic-based monomer (B1) having a carboxy group is selected from the group consisting of acrylic acid, methacrylic acid, ω-carboxy-polycaprolactone mono(meth)acrylate, 2-(meth)acryloyloxyethyl-succinic acid, 2-(meth)acryloyloxyethylhexahydrophthalic acid, and 2-(meth)acryloyloxyethylphthalic acid.

5. The resin composition according to any one of claims 2 to 4, wherein a content of the acrylic-based monomer (B1) is 5% by mass or more based on a total amount of the monomer component.

6.  The resin composition according to any one of claims 1 to 5, comprising no plasticizer, or comprising 10 parts by mass or less of a plasticizer based on 100 parts by mass in total of the polyvinyl acetal resin (A) and the acrylic-based polymer (B).

7. The resin composition according to any one of claims 1 to 6, wherein a glass transition temperature of the acrylic-based polymer (B) is 40°C or less.

8. The resin composition according to any one of claims 1 to 7, wherein the polyvinyl acetal resin (A) is a polyvinyl butyral resin.

9. The resin composition according to any one of claims 1 to 8, wherein a hydroxyl group content of the polyvinyl acetal resin (A) is 15% by mol or more and 37% by mol or less.

10. The resin composition according to any one of claims 1 to 9, wherein a degree of acetylation of the polyvinyl acetal resin (A) is 0.01% by mol or more and 30% by mol or less.

11. The resin composition according to any one of claims 1 to 10, wherein a degree of acetalization of the polyvinyl acetal resin (A) is 40% by mol or more and 85% by mol or less.

12. The resin composition according to any one of claims 1 to 11, wherein an average degree of polymerization of the polyvinyl acetal resin (A) is 500 or more and 5000 or less.

13. A resin film formed of the resin composition according to any one of claims 1 to 12.

14. The resin film according to claim 13, wherein the resin film forms an interlayer film for laminated glass.

**15.** A glass laminate comprising the resin film according to claim 13 or 14, and a glass member, wherein the resin film is provided on at least one surface of the glass member.

**16.** A glass laminate comprising the resin film according to claim 14, and a pair of glass members, wherein the resin film is disposed between the pair of glass members.

**17.** The glass laminate according to claim 15 or 16, wherein any of the glass members is organic glass.

## INTERNATIONAL SEARCH REPORT

| | International application No. |
|---|---|
| | PCT/JP2020/022752 |

**A. CLASSIFICATION OF SUBJECT MATTER**
C08L 29/14(2006.01)i; B32B 17/10(2006.01)i; B32B 27/30(2006.01)i; C03C 27/12(2006.01)i; C08F 20/26(2006.01)i; C08L 33/08(2006.01)i
FI:       C08L29/14; C08L33/08; C08F20/26; C03C27/12 D; C03C27/12 Q; B32B17/10; B32B27/30 102

According to International Patent Classification (IPC) or to both national classification and IPC

**B. FIELDS SEARCHED**

Minimum documentation searched (classification system followed by classification symbols)
C08L29/14; B32B17/10; B32B27/30; C03C27/12; C08F20/26; C08L33/08

Documentation searched other than minimum documentation to the extent that such documents are included in the fields searched
|  |  |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2019-23152 A (SEKISUI CHEMICAL CO., LTD.) 14.02.2019 (2019-02-14) claims, paragraphs [0025], [0038], [0041], [0042], [0046], [0050], [0053], [0068], [0077], [0123], [0137], [0143]-[0151], table 1, paragraph [0168] | 1-17 |
| X | JP 2017-178782 A (SEKISUI CHEMICAL CO., LTD.) 05.10.2017 (2017-10-05) claims, paragraphs [0081], [0082], [0086], [0091], [0094], [0187], [0204], [0229], table 2 | 1-17 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 August 2020 (17.08.2020) | 25 August 2020 (25.08.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application no.

PCT/JP2020/022752

| Patent Documents referred in the Report | Publication Date | Patent Family | Publication Date |
|---|---|---|---|
| JP 2019-23152 A | 14 Feb. 2019 | (Family: none) | |
| JP 2017-178782 A | 05 Oct. 2017 | US 2018/0001598 A1 claims, paragraphs [0088], [0089], [0093], [0098], [0101], [0203], [0204], [0236], table 2 EP 3279159 A1 TW 201638191 A CN 106795050 A KR 10-2017-0132707 A | |

Form PCT/ISA/210 (patent family annex) (January 2015)

**REFERENCES CITED IN THE DESCRIPTION**

**Patent documents cited in the description**

- WO 2014050746 A
- WO 2018181755 A
- WO 2018181758 A